# EUROPÄISCHE PATENTSCHRIFT

(11) **EP 0 706 499 B1**
(45) Veröffentlichungstag und Bekanntmachung des Hinweises auf die Patenterteilung: **23.04.1997**
(21) Anmeldenummer: 94921619.6
(22) Anmeldetag: 22.06.1994
(51) Int. Cl.: C02F 1/56

(54) **VERFAHREN ZUR VERRINGERUNG DES GEHALTS AN FEINDISPERGIERTEN FESTSTOFFEN IN PROZESSWÄSSERN DER PAPIERHERSTELLUNG**
METHOD OF REDUCING THE CONCENTRATION OF FINELY DISPERSED SOLIDS IN PROCESS SOLUTIONS IN PAPER MANUFACTURING
PROCEDE REDUISANT LA TENEUR EN MATIERES SOLIDES FINEMENT DISPERSEES DANS LES EAUX USEES RESULTANT DE LA FABRICATION DU PAPIER

(30) Priorität: 01.07.1993 DE 4321819
(43) Veröffentlichungstag der Anmeldung: 17.04.1996
(73) Patentinhaber: Henkel Kommanditgesellschaft auf Aktien, 40191 Düsseldorf (DE)
(72) Erfinder: LIPHARD, Maria, D-45279 Essen (DE); HORNFECK, Klaus, D-40822 Mettmann (DE); SCHIEFERSTEIN, Ludwig, D-40882 Ratingen (DE); KÖSTER, Rita, D-40479 Düsseldorf (DE); NELLESSEN, Bernhard, D-41564 Kaarst (DE); MATZKE, Wolfgang, D-88276 Berg (DE)
(86) Internationale Anmeldenummer: EP9402038
(87) Internationale Veröffentlichungsnummer: WO9501309

(56) Entgegenhaltungen:
- DE-B- 1 179 098
- FR-A- 1 182 261

## Beschreibung

### Gebiet der Erfindung

Die Erfindung betrifft ein Verfahren zur Verringerung des Gehalts an feindispergierten Feststoffen in Prozeßwässern der Papierherstellung.

### Stand der Technik

Bei der Erzeugung und Verarbeitung von Zellstoff, Holzstoff und Altpapier entstehen verschiedene wasserlösliche und kolloidal gelöste Substanzen anorganischer und organischer Natur. Weitere wasserlösliche Stoffe gelangen mit dem Frischwasser, den Füllstoffen und mit chemischen Hilfsmitteln in den Fabrikationskreislauf. Mit der zunehmenden Einengung der Wasserkreisläufe steigt die Konzentration dieser Substanzen ganz erheblich an. Dadurch kommt es zu einer zusätzlichen Belastung des Abwassers. Noch viel gravierender ist jedoch der störende Einfluß auf den Prozeß der Papierherstellung selbst. Diese in der Fachwelt üblicherweise als "Störstoffe" bezeichneten Substanzen (vergleiche z. B. W. Auhorn, Wochenblatt für Papierfabrikation 1984, 2, 37-48) können den Produktionsablauf empfindlich beeinträchtigen, die Wirksamkeit der chemischen Hilfs- und Veredelungsmittel vermindern und die Papierqualität verschlechtern. Dabei sind es im wesentlichen die gelösten organischen Substanzen, die einer stärkeren Kreislauf-Einengung entgegenstehen.

Wegen der negativen Auswirkungen der Störstoffe wird bei geschlossenen Wasserkreisläufen und Kreislauf-Einengungen meist eine Wasserreinigung notwendig. Dabei werden üblicherweise Flockungs-, Fällungs-, Adsorptions- oder Flotationsverfahren oder Kombinationen dieser Verfahren herangezogen (vergleiche z. B. J. Schurz, Wochenblatt für Papierfabrikation 1990, 3, 109-118). Üblich in Wasch-Deinking-Anlagen ist z. B. die Mikroflotation, bei welcher die suspendierten Feststoffe sowie die gelösten und kolloidalen Stoffe geflockt und danach aus dem Wasser ausflotiert werden (vergleiche z. B. K. Schnabel, Wochenblatt für Papierfabrikation, 1990, 6, 233-237).

Übliche Flockungsmittel bei der Aufbereitung von Prozeßwässern der Papierindustrie sind anorganische und organische Flockungsmittel wie Kalkmilch, Aluminium- oder Eisensalzlösungen, kationische Polymere wie Polyethylenimin, kationische Stärken, Polyamidoamin-Epichlorhydrin-Harze und Melaminformaldehydharze (vergl. die o. g. Artikel von W. Auhorn und J. Schurz). Ein vom Fachmann ganz bevorzugt verwendetes Flockungsmittel ist Polydiallyldimethylammoniumchlorid (vergleiche z. B. R. Nicke et al., Wochenblatt für Papierfabrikation 1992, 14, 559-564 sowie den o. g. Artikel von J. Schurz). Diese Verbindung, üblicherweise als Poly-DADMAC bezeichnet, ist ein lineares Molekül, das in jeder der sich wiederholenden Struktureinheiten eine positive Ladung am Stickstoffatom trägt. Nach außen hin wird diese positive Ladung durch ein negativ geladenes Chloridion neutralisiert. Insgesamt entsteht dadurch ein Polyelektrolyt mit sehr hoher Ladungsdichte.

Zusätzlich zu den erwähnten wasserlöslichen bzw. kolloidal gelösten Störstoffe gelangen auch feindispergierte Feststoffe in die Prozeßwässer der Papierfabrikation und reichern sich dort bei Kreislauf-Einengungen in unerwünschter Weise an. Bei diesen Feststoffen handelt es sich vor allem Füllstoffe, Feinfasern und Druckfarben. Die Entfernung dieser unerwünschten feindispergierten Feststoffe ist dabei vor allem in Gegenwart gelöster bzw. kolloidal gelöster Störstoffe schwierig.

### Beschreibung der Erfindung

Die vorliegende Erfindung geht von der Aufgabe aus, ein Verfahren zur Verringerung des Gehalts an feindispergierten Feststoffen in Prozeßwässern der Papierfabrikation zu entwickeln. Dabei sollte dieses Verfahren insbesondere durch die Gegenwart gelöster bzw. kolloidal gelöster Störstoffe nicht beeinträchtigt werden.

Es wurde nun gefunden, daß spezielle kationische Polymere sich für die Aufbereitung von Kreislaufwässern und Abwässern der Papierfabrikation besonders gut eignen und hierin anderen aus dem Stand der Technik bekannten kationischen Polymeren überlegen sind.

Gegenstand der vorliegenden Erfindung ist daher ein Verfahren zur Verringerung des Gehalts an feindispergierten Feststoffen in Prozeßwässern der Papierherstellung, wobei man dem Prozeßwasser ein kationisches Polymer zudosiert und die ausgeflockten Feststoffe anschließend durch Flotation und/oder Filtration entfernt und wobei man
i) als kationisches Polymer eine mindestens teilweise wasserlösliche stickstoffhaltige Verbindung mit Gewichtsmitteln der Molekulargewichte zwischen 2.000 und 1.000.000 einsetzt, erhältlich durch Copolymerisation von aminogruppenhaltigen Monomeren der allgemeinen Formel I 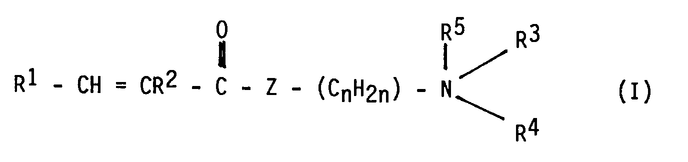 in der R¹ und R² jeweils ein Wasserstoffatom oder eine Methylgruppe, R³ und R⁴ jeweils ein Wasserstoffatom oder eine Alkylgruppe mit 1 bis 4 C-Atomen oder einen Piperazin-, Piperidin- oder Morpholin-Rest und R⁵ einen gerad- oder verzweigtkettigen Alkylrest mit 1 bis 22 C-Atomen mit der Maßgabe, daß das Gegenion zur Ammoniumfunktion ein Halogen-, Sulfat-, Phosphat-, Borat- oder organisches Säure-Anion oder ein Elektronenpaar ist, Z Sauerstoff oder NH bedeutet und n eine Zahl zwischen 2 und 5 ist,
   mit
   monomeren, ungesättigten Carbonsäureestern der allgemeinen Formel III 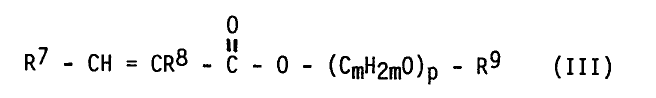 in der die Reste R⁷ und R⁸ jeweils ein Wasserstoffatom oder eine Methylgruppe und R⁹ eine gerad- oder verzweigtkettige Alkylgruppe mit 1 bis 22 C-Atomen, m eine Zahl zwischen 2 und 4 und p eine Zahl zwischen 0 und 18 bedeuten, mit der Maßgabe, daß im Falle p = 0 der Gehalt ungesättigter Carbonsäureester im Copolymer 90 Gew.-% nicht übersteigt
   und
ii) das unter i) genannte kationische Polymer in einer Menge von 1 bis 500 mg Aktivsubstanz pro Liter Prozeßwasser einsetzt.

Unter dem Ausdruck "mindestens teilweise wasserlöslich" ist im Sinne der vorliegenden Erfindung zu verstehen, daß die Copolymeren unter Anwendungs-Bedingungen zu mehr als 0,01 Gew.-% in Wasser klar oder trübe löslich sind.

Unter feindispergierten Feststoffen sind im Sinne der vorliegenden Erfindung Feststoffe mit Teilchengrößen im Bereich von etwa 0,1 bis 1000 µm zu verstehen. Im engeren Sinne sind damit Feinfasern, Füllstoffe und Druckfarben angesprochen.

Das erfindungsgemäße Verfahren ist in vorteilhafter Weise auch dann anwendbar, wenn das Prozeßwasser, dessen Anteil an feindispergierten Feststoffen verringert werden soll, zusätzlich gelöste oder kolloidal gelöste Störstoffe enthält.

Die Gewichtsmittel der Molekulargewichte der erfindungsgemäß einzusetzenden kationischen Polymeren liegen vorzugsweise im Bereich von 5.000 bis 500.000. Dabei ist der Bereich von 10.000 bis 200.000 ganz besonders bevorzugt.

In einer bevorzugten Ausführungsform dr vorliegenden Erfindung werden die genannten speziellen kationischen Polymeren in einer Menge von 5 bis 100 mg Aktivsubstanz pro Liter Prozeßwasser eingesetzt.

Als aminogruppenhaltige Monomere der allgemeinen Formel I eignen sich insbesondere solche, in denen die Reste R¹ Wasserstoff, R² Wasserstoff oder Methyl, R³ und R⁴ jeweils Methyl oder Ethyl, R⁵ ein Elektronenpaar oder eine Alkylgruppe mit 1 bis 4 C-Atomen mit der Maßgabe, daß das Gegenion zur Amoniumfunktion ein Halogen-Anion ist, bedeuten. Beispiele sind Dimethylaminoethylmethacrylat, Dimethylaminoethylacrylat, Dimethylaminopropylmethacrylamid, Dimethylaminoneopentylacrylat, Diethylaminoethylacrylat, Diethylaminoethylmethacrylat und/oder Methacrylamidopropyldimethylammoniumchlorid.

Monomere, ungesättigte Carbonsäureester der allgemeinen Formel III, in denen der Rest R⁹ vorzugsweise eine gerad- oder verzweigtkettige Alkylgruppe mit 1 bis 8 C-Atomen bedeutet, sind etwa Ethylacrylat, Methylmethacrylat, Butylacrylat, Butylmethacrylat, Octylacrylat und/oder ein Anlagerungsprodukt von 3 Mol Ethylenoxid an Butylacrylat.

Zur Copolymerisation mit aminogruppenhaltigen Monomeren der allgemeinen Formel I eignen sich ferner Acrylamid, Methacrylamid, N-Ethylacrylamid und/oder tert. -Butylacrylamid.

Die Copolymerisation der aminogruppenhaltigen Monomeren der allgemeinen Formel I wird nach an sich bekannten Polymerisationsverfahren in wäßrigen Medien, die gewünschtenfalls mit Wasser mischbare Lösungsmittel wie Alkohole - z. B. Isopropanol - enthalten, durchgeführt. Als Starter wird dabei eine radikalbildende Substanz, beispielsweise Kalium- oder Amoniumperoxodisulfat, tert.-Butylhydroperoxid, Azobis(isobutyronitril) in geringen Mengen zugegeben. Die Copolymerisation der aminogruppenhaltigen Monomeren der allgemeinen Formel I kann beispielsweise in der Weise erfolgen, daß die Monomeren I und die Monomeren der allgemeinen Formel III gleichzeitig in Wasser, das den Starter enthält, getropft werden. Die Polymerisationstemperatur ist an sich nicht kritisch und kann in weitem Bereich schwanken. In Abhängigkeit vom eingesetzten Starter können Temperaturen zwischen 60 und 100 °C optimal sein. Es werden wäßrige Copolymerenlösungen mit Polymerengehalten beispielsweise zwischen 10 und 60 Gew. -% erhalten.

Art und Herkunft der Prozeßwässer unterliegen im Rahmen der vorliegenden Erfindung an sich keinen besonderen Einschränkungen. Beispielhaft seien genannt: Kreislaufwässer aus dem Waschdeinking bzw. der Kombination Flotation/Wäsche, Wässer aus Entwässerungsaggregaten der Papiermaschinen (Siebwässer), Eindickwässer aus Pressen.

In vielen Fällen kann das Ausmaß der Entfernung der dispergierten festen Störstoffe gesteigert werden, wenn die erfindungsgemäß geeigneten speziellen kationischen Polymeren in Kombination mit Flotationssammlern und/oder anorganischen Adsorptions- oder Flockungsmitteln eingesetzt werden. In einer weiteren Ausführungsform bezieht sich die vorliegende Erfindung daher auf Kombinationen der genannten speziellen kationischen Polymeren mit weiteren Flotationssammlern und/oder anorganischen Flokkungsmitteln.

Beispiele für Flotationssammler sind C₁₀₋₂₂-Fettsäuren sowie deren Alkali- und Erdalkalisalze, alkoxylierte C₆₋₂₂-Alkohole, alkoxylierte Alkylphenole. Ganz besonders eignen sich dabei die genannten Fettsäuren sowie Fettalkoholalkoxylate mit hohem Anteil an Alkylenoxid, insbesondere Ethylenoxid. Beispiele für Flockungsmittel sind Kalkmilch, Aluminium- oder Eisensalzlösungen.

In einer weiteren bevorzugten Ausführungsform der vorliegenden Erfindung entfernt man die ausgeflockten Feststoffe durch Flotation.

Ein weiterer Gegenstand der Erfindung ist die Verwendung der obengenannten speziellen kationischen Polymeren zur Verringerung des Gehalts an feindispergierten Feststoffen in Prozeßwässern der Papierherstellung. Dabei hat sich herausgestellt, daß der Anteil von feindispergierten Feststoffen durch den Einsatz der erfindungsgemäßen kationischen Polymeren in deutlich höherem Maße reduziert wird, als durch den Einsatz üblicher kationischer Polymeren, die aus dem Stand der Technik bekannt sind.

Die folgenden Beispiele dienen der Erläuterung der Erfindung und sind nicht einschränkend zu verstehen.

### Beispiele

### 1. Verwendete Substanzen

**Poly-DADMAC:** Kommerzielles Polydiallyldimethylammoniumchlorid; ca. 40%-ig; mittleres Molekulargewicht 200.000 (Fa. Mütek).
**Polymer A:** Die Herstellung dieses erfindungsgemäßen kationischen Polymers wurde in unterschiedlichen Ansatzgrößen realisiert. Die nachfolgende Beschreibung der Herstellung bezieht sich auf den 1,5-kg-Labormaßstab; die Gewichtsanteile der Komponenten in den nachstehend angegebenen Phasen a), b) und c) beziehen sich auf den Gesamtansatz und addieren sich dementsprechend zu 100%.
   a) wäßrige Phase:
      - 59,3 Gew.-Teile demineralisiertes Wasser
      - 6,5 Gew.-Teile 30%-ige Schwefelsäure
      - 2,0 Gew.-Teile Acrylsäure
   b) organische Phase:
      - 13,3 Gew.-Teile Dimethylaminoethylmethacrylat
      - 2,8 Gew.-Teile Methylmethacrylat
      - 6,0 Gew.-Teile Isopropanol
   c) Starterlösung:
      - 10,0 Gew.-Teile Isopropanol
      - 0,1 Gew.-Teile Azobis(isobuttersäurenitril)

In einem Reaktor (Reaktionsgefäß mit Rührer, Heizung, Außenkühler, Rückflußkühler, Innenthermometer und Zulaufmischgefäß) wurde die wäßrige Phase vorgelegt. Die organische Phase wurde in einem Zulaufmischgefäß homogenisiert und dann langsam unter Rühren in den Reaktor dosiert. Die Reaktionsmischung erwärmte sich dabei durch die Exothermie der Reaktion leicht. Anschließend wurde bei etwa 30 °C die Starterlösung zugegeben. Der pH-Wert dieser Mischung betrug 7,3. Die Reaktionsmischung wurde nunmehr mittels einer Außenheizung vorsichtig auf 65 °C erwärmt. Die nach dem Start der Reaktion auftretende Exothermie wurde durch vorsichtige Außenkühlung kontrolliert. Nach 30 Minuten wurde die Innentemperatur der Reaktionsmischung auf 70 °C und nach einer weiteren Stunde auf 80 °C angehoben und eine weitere Stunde bei dieser Temperatur gerührt. Man ließ abkühlen und erhielt eine klare, leicht gelblich gefärbte Lösung mit einem Aktivsubstanzgehalt von ca. 20,5 Gew.-%.

### 2. Herkunft des störstoffhaltigen Kreislaufwassers

Für die nachstehend beschriebenen Untersuchungen wurde ein Kreislaufwasser aus einer Altpapieraufbereitungsanlage eingesetzt. Die Anlage verfügte neben der üblichen Stoffaufbereitung und den Papiermaschinen über ein Flotations-Deinking-System.

Die für die nachstehend beschriebenen Untersuchungen benötigte Kreislaufwasser-Probe wurde dem Stoffaufbereitungsteil der Anlage entnommen. Sie wies einen pH-Wert von ca. 8 auf. Sie enthielt neben den unerwünschten Feststoffen auch gelöste bzw. kolloidal gelöste anionische Störstoffe. Der Anteil der letztgenannten Störstoffe wurde nach der Methode von L.Bley (vergl. Wochenblatt für Papierfabrikation 1989, 3, S.114) zu 5.10⁻³ mol/l bestimmt.

### 3. Durchführung der Versuche

### 3.1. Bestimmung des Feststoffgehalts im Kreislaufwasser

Eine Probe des aus der Altpapieraufbereitungsanlage stammenden Kreislaufwassers wurde über ein Papierfilter (mittelschnell filtrierend, mittlerer Porendurchmesser 5,8 µm) filtriert und der Filter anschließend eine Stunde bei 90 °C getrocknet. Die Gewichtszunahme des Papierfilters ist ein Maß für die im Kreislaufwasser enthaltenen feindispergierten Feststoffe. Der Gehalt des Kreislaufwassers an Feststoff wurde auf diese Weise zu 0,79 g/l ermittelt.

### 3.2. Vergleichsversuch 1

Eine 9-l-Laborflotationszelle vom Denvertyp wurde mit der aus der Altpapieraufbereitungsanlage stammenden Kreislaufwasserprobe gefüllt. Bei einem Luftdurchsatz von 200 l/h und einer Umdrehungszahl des eingebauten Rührers von 1200 min⁻¹ wurde 2 Minuten flotiert. Danach wurde das Wasser aus der Flotationszelle wie unter 3.1. beschrieben über ein Papierfilter filtriert und der Filter anschließend getrocknet. Der Gehalt des Kreislaufwassers an Feststoff wurde zu 0,57 g/l bestimmt. Durch Vergleich mit dem unter 3.1. ermittelten Wert von 0,79 g/l ergibt sich, daß der Feststoffgehalt ohne den Zusatz eines Hilfsstoffes, d.h. durch alleinige Flotation, um 28% reduziert wurde.

### 3.3. Vergleichsversuch 2

Eine 9-l-Laborflotationszelle vom Denvertyp wurde mit der aus der Altpapieraufbereitungsanlage stammenden Kreislaufwasserprobe gefüllt. Es wurde eine verdünnte wäßrige Lösung des aus dem Stand der Technik bekannten Polymers Poly-DADMAC in einer Menge von 10 mg Aktivsubstanz Poly-DADMAC pro 1 Liter Kreislaufwasser zugegeben. Bei einem Luftdurchsatz von 200 l/h und einer Umdrehungszahl des eingebauten Rührers von 1200 min⁻¹ wurde 2 Minuten flotiert. Danach wurde das Wasser aus der Flotationszelle wie unter 3.1. beschrieben über ein Papierfilter filtriert und der Filter anschließend getrocknet. Der Gehalt des Kreislaufwassers an Feststoff wurde zu 0,31 g/l bestimmt. Durch Vergleich mit dem unter 3.1. ermittelten Wert von 0,79 g/l ergibt sich, daß der Feststoffgehalt beim Zusatz von Poly-DADMAC um 61% reduziert wurde.

### 3.4. Beispiel 1 (gemäß der Erfindung)

Eine 9-l-Laborflotationszelle vom Denvertyp wurde mit der aus der Altpapieraufbereitungsanlage stammenden Kreislaufwasserprobe gefüllt. Es wurde eine verdünnte wäßrige Lösung des erfindungsgemäßen Polymers A in einer Menge von 10 mg Aktivsubstanz des Polymers A pro 1 Liter Kreislaufwasser zugegeben. Bei einem Luftdurchsatz von 200 l/h und einer Umdrehungszahl des eingebauten Rührers von 1200 min⁻¹ wurde 2 Minuten flotiert. Danach wurde das Wasser aus der Flotationszelle wie unter 3.1. beschrieben über ein Papierfilter filtriert und der Filter anschließend getrocknet. Der Gehalt des Kreislaufwassers an Feststoff wurde zu 0,06 g/l bestimmt. Durch Vergleich mit dem unter 3.1. ermittelten Wert von 0,79 g/l ergibt sich, daß der Feststoffgehalt beim Zusatz des erfindungsgemäßen Polymeren A um 92% reduziert wurde.

### 4. Diskussion der Ergebnisse

Die in den unter 3.1. bis 3.4. gefundenen Werte sind der besseren Übersicht halber nochmals in der folgenden Tabelle zusammengestellt:

| zugesetzes Polymer | Feststoffanteil (g/l) | | Reduktion des Feststoffanteils |
|---|---|---|---|
| | vor Flotation | nach Flotation | |
| - | 0,79 | 0,57 | 28 % |
| Poly-DADMAC | 0,79 | 0,31 | 61 % |
| Polymer A | 0,79 | 0,06 | 92 % |

Es wird deutlich, daß mit dem erfindungsgemäßen kationischen Polymeren bessere Resultate erzielt werden, als mit dem aus dem Stand der Technik bekannten Poly-DADMAC.

## Patentansprüche

1. Verfahren zur Verringerung des Gehalts an feindispergierten Feststoffen in Prozeßwässern der Papierherstellung, wobei man dem Prozeßwasser ein kationisches Polymer zudosiert und die ausgeflockten Feststoffe anschließend durch Flotation und/oder Filtration entfernt, **dadurch gekennzeichnet**, daß man
i) als kationisches Polymer eine mindestens teilweise wasserlösliche stickstoffhaltige Verbindung mit Gewichtsmitteln der Molekulargewichte zwischen 2.000 und 1.000.000 einsetzt, erhältlich durch Copolymerisation von aminogruppenhaltigen Monomeren der allgemeinen Formel I 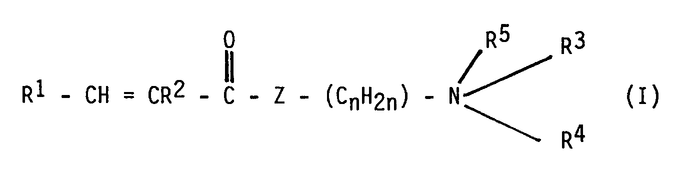 in der R¹ und R² jeweils ein Wasserstoffatom oder eine Methylgruppe, R³ und R⁴ jeweils ein Wasserstoffatom oder eine Alkylgruppe mit 1 bis 4 C-Atomen oder einen Piperazin-, Piperidin- oder Morpholin-Rest und R⁵ einen gerad- oder verzweigtkettigen Alkylrest mit 1 bis 22 C-Atomen mit der Maßgabe, daß das Gegenion zur Ammoniumfunktion ein Halogen-, Sulfat-, Phosphat-, Borat- oder organisches Säure-Anion oder ein Elektronenpaar ist, Z Sauerstoff oder NH bedeutet und n eine Zahl zwischen 2 und 5 ist,
mit
monomeren, ungesättigten Carbonsäureestern der allgemeinen Formel III 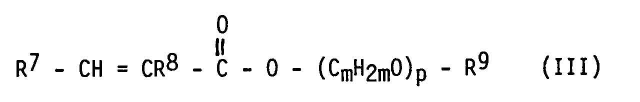 in der die Reste R⁷ und R⁸ jeweils ein Wasserstoffatom oder eine Methylgruppe und R⁹ eine gerad- oder verzweigtkettige Alkylgruppe mit 1 bis 22 C-Atomen, m eine Zahl zwischen 2 und 4 und p eine Zahl zwischen 0 und 18 bedeuten, mit der Maßgabe, daß im Falle p = 0 der Gehalt ungesättigter Carbonsäureester im Copolymer 90 Gew.-% nicht übersteigt
und
ii) das unter i) genannte kationische Polymer in einer Menge von 1 bis 500 mg Aktivsubstanz pro Liter Prozeßwasser einsetzt.

2. Verfahren nach Anspruch 1, wobei die Feststoff-haltigen Prozeßwässer zusätzlich gelöste bzw. kolloidal gelöste Störstoffe enthalten.

3. Verfahren nach Anspruch 1 oder 2, wobei man kationische Polymere mit Gewichtsmitteln der Molekulargewichte zwischen 5.000 und 500.000, vorzugsweise zwischen 10.000 und 200.000, einsetzt.

4. Verfahren nach einem der Ansprüche 1 bis 3, wobei man das kationische Polymer in einer Menge von 5 bis 100 mg Aktivsubstanz pro Liter Prozeßwasser einsetzt.

5. Verfahren nach einem der Ansprüche 1 bis 4, wobei man das kationische Polymer in Kombination mit einem Flotationssammler und/oder einem anorganischen Flockungsmittel einsetzt.

6. Verfahren nach einem der Ansprüche 1 bis 5, wobei man die ausgeflockten Feststoffe durch Flotation entfernt.

7. Verwendung der in den Ansprüchen 1 und 2 näher bezeichneten kationischen Polymeren zur Verringerung des Gehalts an feindispergierten Feststoffen in Prozeßwässern der Papierherstellung.

## Claims

1. A process for reducing the content of finely dispersed solids in process waters of the papermaking industry, a cationic polymer being added to the process water and the flocculated solids being subsequently removed by flotation and/or filtration, characterized in that
i) an at least partly water-soluble nitrogen-containing compound with weight average molecular weights of 2,000 to 1,000,000 obtainable by copolymerization of aminofunctional monomers corresponding to general formula I: 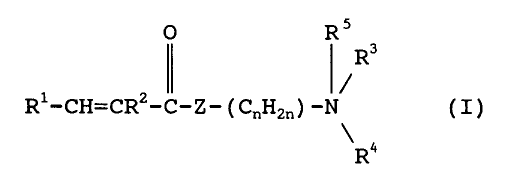 in which R¹ and R² are each a hydrogen atom or a methyl group, R³ and R⁴ are each a hydrogen atom or a C₁₋₄ alkyl group or a piperazine, piperidine or morpholine group and R⁵ is a linear or branched C₁₋₂₂ alkyl radical, with the proviso that the counterion to the ammonium function is a halogen, sulfate, phosphate, borate or organic acid anion or an electron pair, Z is oxygen or NH and n is a number of 2 to 5,
with
monomeric, unsaturated carboxylic acid esters corresponding to general formula III: 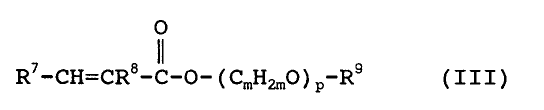 in which R⁷ and R⁸ are each a hydrogen atom or a methyl group and R⁹ is a linear or branched C₁₋₂₂ alkyl group, m is a number of 2 to 4 and p is a number of 0 to 18, with the proviso that, where p = 0, the content of unsaturated carboxylic acid esters in the copolymer does not exceed 90% by weight,
and
ii) the cationic polymer mentioned in i) is used in a quantity of 1 to 500 mg of active substance per litre of process water.

2. A process as claimed in claim 1, characterized in that the solids-containing process waters additionally contain dissolved or colloidally dissolved impurities.

3. A process as claimed in claim 1 or 2, characterized in that cationic polymers with weight average molecular weights in the range from 5,000 to 500,000 and preferably in the range from 10,000 to 200,000 are used.

4. A process as claimed in any of claims 1 to 3, characterized in that the cationic polymer is used in a quantity of 5 to 100 mg of active substance per litre of process water.

5. A process as claimed in any of claims 1 to 4, characterized in that the cationic polymer is used in combination with a flotation collector and/or an inorganic flocculant.

6. A process as claimed in any of claims 1 to 5, characterized in that the flocculated solids are removed by flotation.

7. The use of the cationic polymers defined in detail in claims 1 and 2 for reducing the content of finely dispersed solids in process waters of the papermaking industry.

## Revendications

1. Procédé de réduction de la teneur en solides finement dispersés dans les eaux de procédé de la production du papier, où on ajoute à l'eau de procédé un polymère cationique et on élimine ensuite les solides floculés par flottation et/ou filtration,
caractérisé en ce que :
i) on utilise comme polymère cationique un composé au moins partiellement hydrosoluble contenant de l'azote ayant des poids moléculaires moyens compris entre 2000 et 1 000 000 qu'on peut obtenir par copolymérisation de monomères contenant des groupes amino de formule générale I : 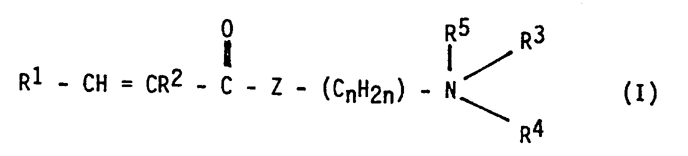 où R¹ et R² représentent respectivement un atome d'hydrogène ou un groupe méthyle, R³ et R⁴ représentent respectivement un atome d'hydrogène ou un groupe alkyle de 1 à 4 atomes de C ou un radical pipérazine, pipéridine ou morpholine, et R⁵ représente un radical alkyle à chaîne droite ou ramifiée de 1 à 22 atomes de C à la condition que l'ion de signe opposé à celui de la fonction ammonium est un anion halogénure, sulfate, phosphate, borate ou un anion d'un acide organique ou une paire d'électrons, Z est l'oxygène ou NH et n est un nombre comprise entre 2 et 5,
avec
des monomères d'esters d'acides carboxyliques insaturés de formule générale III, 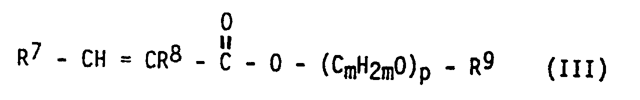 où les radicaux R⁷ et R⁸ représentent respectivement un atome d'hydrogène ou un groupe méthyle et R⁹ est un groupe alkyle à chaîne droite ou ramifiée de 1 à 22 atomes de C, m est un nombre de 2 à 4 et p est un nombre entre 0 et 18, à la condition qu'au cas où p = 0, la teneur en esters d'acides carboxyliques insaturés dans le copolymère ne dépasse pas 90 % en poids et,
ii) on utilise le polymère cationique cité en i) en une quantité de 1 à 500 mg de substance active par litre d'eau de procédé.

2. Procédé selon la revendication 1, où les eaux de procédé contenant le solide contiennent en plus des substances gênantes dissoutes ou dissoutes à l'état colloïdal.

3. Procédé selon la revendication 1 ou 2, où on utilise des polymères cationiques de poids moléculaires moyens en poids compris entre 5000 et 500.000, de préférence entre 10.000 et 200.000.

4. Procédé selon l'une des revendications 1 à 3, où on utilise le polymère cationique en une quantité de 5 à 100 mg de substance active par litre d'eau de procédé.

5. Procédé selon l'une des revendications 1 à 4, où on utilise le polymère cationique en combinaison avec un collecteur de flottation et/ou un floculant minéral.

6. Procédé selon l'une des revendications 1 à 5 où on élimine les solides floculés par flottation.

7. Utilisation des polymères cationiques définis en détail aux revendications 1 et 2 pour diminuer la teneur en solides finement dispersés dans les eaux de procédé de la production du papier.
